# EUROPEAN PATENT SPECIFICATION

(11) **EP 4 405 741 B1**
(45) Date of publication and mention of the grant of the patent: **28.10.2026**
(21) Application number: 22793330.6
(22) Date of filing: 20.09.2022
(51) Int. Cl.: G02F 1/09, G02B 6/27

(54) **DUAL-POLARIZATION ROTATIONALLY-INSENSITIVE MONOSTATIC TRANSCEIVER WITH STANDARD FIBER**
DREHUNEMPFINDLICHER MONOSTATISCHER SENDER-EMPFÄNGER MIT DOPPELPOLARISATION UND STANDARDFASER
ÉMETTEUR-RÉCEPTEUR MONOSTATIQUE INSENSIBLE À LA ROTATION À DOUBLE POLARISATION AVEC FIBRE STANDARD

(30) Priority: 21.09.2021 US 202163246648 P; 21.09.2021 US 202163246676 P; 21.09.2021 US 202163246693 P
(43) Date of publication of application: 31.07.2024
(73) Proprietor: Raytheon Company, Waltham, MA 02451-1449 (US)
(72) Inventor: KOWALEVICZ, Andrew M., Sterling, Virginia 20166 (US); GRACEFFO, Gary M., Sterling, Virginia 20166 (US); DOLGIN, Benjamin P., Sterling, Virginia 20166 (US)
(74) Representative: Crowell & Moring U.K. LLP
(86) International application number: PCT/US2022/076739
(87) International publication number: WO 2023/049715

(56) References cited:
- EP-A1- 1 022 590
- CN-A- 111 504 296
- CN-B- 104 950 407
- GB-A- 2 439 213
- US-A- 5 052 786
- US-B1- 9 989 700

## Description

This application claims priority under 35 U.S.C. § 119(e) to U.S. Provisional Patent Application Nos. 63/246,648; 63/246,676; and 63/246,693 all filed on September 21, 2021.

This application is related to the following non-provisional patent applications being filed concurrently herewith:
- U.S. Patent Application No. 17/933,766 [Docket No. 169824US02 (RAYN01-169824)] entitled "SYSTEM AND METHOD FOR DIRECTIONALLY-DEPENDENT POLARIZATION MODIFICATION"; and
- U.S. Patent Application No. 17/933,779 [Docket No. 170108US02 (RAYN01-170108)] entitled "DUAL-POLARIZATION ROTATIONALLY-INSENSITIVE MONOSTATIC TRANSCEIVER WITH DUAL CLADDING FIBER."

### TECHNICAL FIELD

This disclosure is generally directed to optical systems. More specifically, this disclosure is directed to a dual-polarization rotationally-insensitive monostatic transceiver with standard fiber.

### BACKGROUND

Optical communication systems use light to transport data between locations. Next-generation optical transceivers are being designed for use in free-space optical systems, which refer to systems where optical signals are transmitted and received through free space rather than through optical fibers. Increasing the data capacity of free-space optical systems is becoming more and more important as the demand for high-throughput data products increases. Using two polarizations of light in an optical signal can double the capacity of a single optical channel. However, this is typically achieved using separate transmit and receive apertures in devices using the optical channel, which increases the size, cost, and complexity of the devices. While some monostatic systems have been developed that permit simultaneous transmission and reception of optical signals using a single aperture, these systems rely on the use of multiple wavelengths without any dual polarization capabilities.

GB 2 439 213 A relates to a multi-stage, multi-port isolator.

US 9 989 700 B1 relates to an optical coupler for an optical communications transceiver.

### SUMMARY

This disclosure is directed to a dual-polarization rotationally-insensitive monostatic transceiver with standard fiber.

According to an aspect of the invention, there is provided an apparatus according to appended claim 1.

According to another aspect of the invention, there is provided a method according to appended claim 11.

In a first embodiment, an apparatus includes first and second polarization beamsplitters each configured to separate incoming and outgoing optical signals having different polarizations. The apparatus also includes first and second directionally-dependent polarization rotation optical assemblies each configured to maintain a polarization of one of the incoming and outgoing optical signals and to rotate a polarization of another of the incoming and outgoing optical signals. The apparatus further includes a third polarization beamsplitter configured to (i) combine the outgoing optical signals to produce transmit optical signals and (ii) separate receive optical signals to produce the incoming optical signals.

In a second embodiment, a system includes a fiber coupling configured to couple to a fiber optic waveguide, where the fiber coupling includes first fiber terminals for a first channel and second fiber couplings for a second channel. The system also includes at least one first polarization beamsplitter configured to separate incoming and outgoing optical signals based on different polarizations of the incoming and outgoing optical signals. The system further includes at least one directionally-dependent polarization rotation optical assembly configured to maintain a polarization of one of the incoming and outgoing optical signals and to rotate a polarization of another of the incoming and outgoing optical signals. The system also includes a second polarization beamsplitter configured to (i) combine the outgoing optical signals from the channels to produce transmit optical signals and (ii) separate receive optical signals to produce the incoming optical signals for the channels.

In a third embodiment, a method includes separating incoming and outgoing optical signals having different polarizations using first and second polarization beamsplitters. The method also includes passing the incoming optical signals and the outgoing optical signals through first and second directionally-dependent polarization rotation optical assemblies. Each of the directionally-dependent polarization rotation optical assemblies maintains a polarization of one of the incoming and outgoing optical signals and rotating a polarization of another of the incoming and outgoing optical signals. The method further includes combining the outgoing optical signals to produce transmit optical signals and separating receive optical signals to produce the incoming optical signals.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example free-space optical (FSO) system according to this disclosure;
FIGURE 2 illustrates an example monostatic optical transceiver according to this disclosure; and
FIGURE 3 illustrates an example method for transmitting and receiving multiple non-interfering polarization signals according to this disclosure.

### DETAILED DESCRIPTION

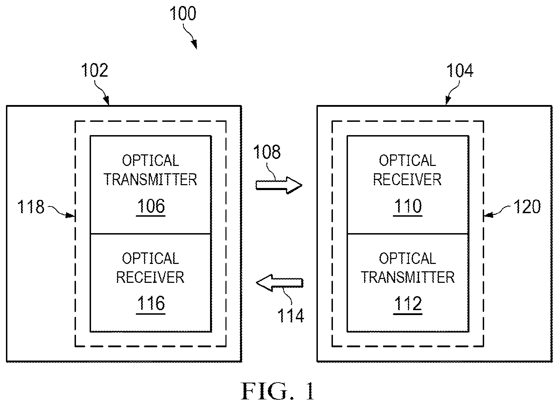

FIGURES 1 through 3, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As described above, optical communication systems use light to transport data between locations. Next-generation transceivers are being designed for use in free-space optical systems, which refer to systems where optical signals are transmitted and received through free space rather than through optical fibers. Increasing the data capacity of free-space optical systems is becoming more and more important as the demand for high-throughput data products increases. Using two polarizations of light in an optical signal can double the capacity of a single optical channel. However, this is typically achieved using separate transmit and receive apertures in devices using the optical channel, which increases the size, cost, and complexity of the devices. While some monostatic systems have been developed that permit simultaneous transmission and reception of optical signals using a single aperture, these systems rely on the use of multiple wavelengths without any dual polarization capabilities.

This disclosure provides various implementations of dual-polarization rotationally-insensitive monostatic transceivers. Each dual-polarization rotationally-insensitive monostatic transceiver is configured to simultaneously transmit and receive multiple polarizations, such as on the same wavelength and at the same time, on a non-interfering basis. Moreover, the performance of an optical link between transceivers can remain unaffected by rotational changes between the transceivers at either end of the optical link, which can be achieved passively (without feedback or optical control). Among other things, this is achieved using one or more techniques for using circularly polarized light. As a particular example, using directionally dependent polarization modification of the circularly polarized light can permit an optical signal propagating in one direction to undergo no polarization change while an optical signal propagating in the opposite direction is rotated by 90°.

Some embodiments of this disclosure provide dual-polarization transmit and receive capabilities in a monostatic transceiver. Various embodiments allow the same wavelength or different wavelengths to be used on any transmit or receiver channel without interference. Single-mode, multi-mode, or PM fiber may be used for outgoing optical signals. When PM fiber is not used, the transceiver may generate orthogonal transmit beams (also referred to as signals) that will not interfere. In some embodiments, a transceiver does not require complex dual cladding fiber and includes a passive rotationally-invariant transmit and receiver capability to simplify use across platforms. Moreover, some embodiments can maintain compatibility with intensity modulator or complex modulation formats. The transceivers can also maintain compatibility with multiple data rates on different channels if needed or desired or maintain compatibility with wavelength division multiplexing (WDM) for increasing data capacity. Some embodiments provide a transceiver that is compatible with an all-fiber-based etalon-enhanced receiver for modularity. Some embodiments enable separate tracking of multiple polarization channels when in the same field of view. According to some embodiments, position, acquisition, and tracking flexibility can be used depending on how a transceiver is configured. In addition, a monostatic transceiver may use directionally-dependent polarization modification to apply relative polarization rotation as a function of a direction of propagation of a light beam.

FIGURE 1 illustrates an example free-space optical (FSO) system 100 according to this disclosure. As shown in FIGURE 1, the system 100 includes two nodes 102 and 104 that communicate with one another optically. Each node 102 and 104 represents a ground-, air-, or space-based system that can transmit or receive data using optical communications. In this example, the nodes 102 and 104 can engage in bidirectional communication with one another. However, this is not necessarily required, and the nodes 102 and 104 may engage in unidirectional communication with one another (meaning one node 102 or 104 may only transmit and the other node 104 or 102 may only receive, at least with respect to each other).

The node 102 in this example includes an optical transmitter 106, which generally operates to produce optical signals 108 used for communication or other purposes. For example, the optical transmitter 106 may encode information onto the optical signals 108, such as by using suitable amplitude, phase, frequency, or other modulation(s) of light. The optical signals 108 can be transmitted through free space or other transmission medium to the node 104, where an optical receiver 110 receives and processes the optical signals 108. For instance, the optical receiver 110 can identify the amplitude, phase, frequency, or other modulation(s) of light in the optical signals 108 and use the identified modulation(s) to recover the information encoded onto the optical signals 108. Any suitable type of modulation/ demodulation scheme may be used here to encode and decode the optical signals 108 (assuming communication is one purpose of the optical signals 108). Since the nodes 102 and 104 are bidirectional in this example, the same process can be used in the opposite direction, meaning an optical transmitter 112 of the node 104 produces optical signals 114 that are transmitted towards the node 102 and received and processed by an optical receiver 116 of the node 102.

Note that while the optical transmitter 106 and the optical receiver 116 are shown here as separate components, they can be integrated into a single optical transceiver 118. This may allow, for example, the same structure to be used for both transmission and reception purposes. Similarly, while the optical transmitter 112 and the optical receiver 110 are shown here as separate components, they can be integrated into a single optical transceiver 120. This may allow, for instance, the same structure to be used for both transmission and reception purposes.

The optical transmitters, receivers, and transceivers described in this disclosure may find use in a large number of applications, such as communications, imaging, and remote sensing applications. For example, optical transmitters, receivers, or transceivers may be used in data centers or telecommunication systems to transport information rapidly between locations, including the transport of large amounts of information over very large distances. Optical transmitters, receivers, or transceivers may be used in consumer or commercial electronic devices, biomedical devices, or advanced computing devices to support optical-based communications with those devices. Optical transmitters, receivers, or transceivers may be used in airplanes, drones, satellites, autonomous vehicles, rockets, missiles, or other commercial or defense-related systems. Optical transmitters, receivers, or transceivers may be used in non-communication-related optical applications, such as laser detection and ranging (LADAR) applications or other applications that can use polarimetric processing. In general, this disclosure is not limited to any particular application of the optical transmitters, receivers, and transceivers.

Although FIGURE 1 illustrates one example of a free-space optical system 100, various changes may be made to FIGURE 1. For example, while only two nodes 102 and 104 are shown here, the system 100 may include any suitable number of nodes that engage in any suitable unidirectional, bidirectional, or other communications or other interactions with each other. Also, each node of the system 100 may include any suitable number of optical transmitters, receivers, or transceivers that communicate or otherwise use any number of optical signals. In addition, the system 100 is shown in simplified form here and may include any number of additional components in any suitable configuration as needed or desired.

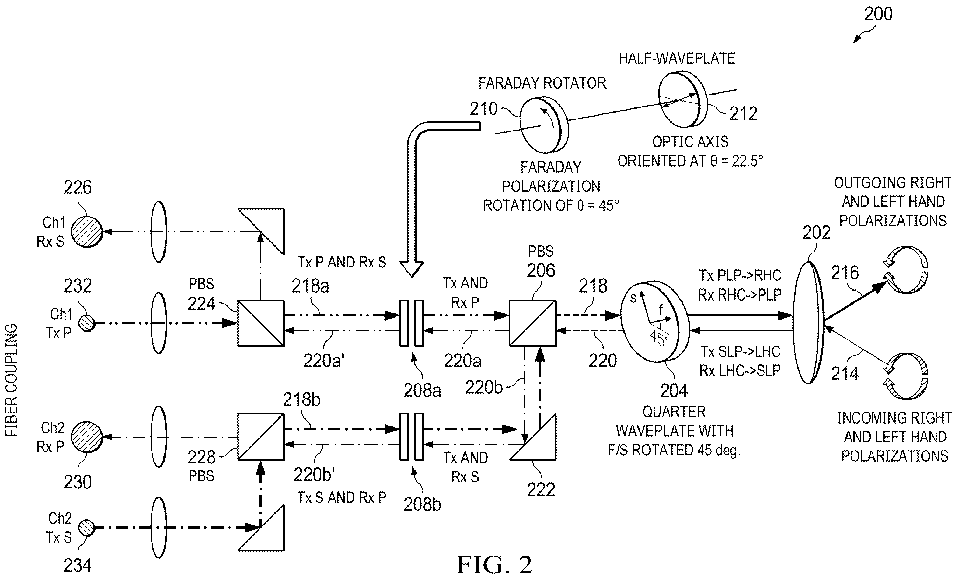

FIGURE 2 illustrates an example monostatic optical transceiver 200 according to this disclosure. The optical transceiver 200 may, for example, represent or be used within the optical nodes 102 and 104 of the system 100 of FIGURE 1. However, the optical transceiver 200 may be used in any other suitable device(s) and in any other suitable system(s).

As shown in FIGURE 2, the monostatic optical transceiver 200 includes a collection telescope 202, a quarter waveplate 204, a polarization beam splitter (PBS) 206, and at least one directionally-dependent optical assembly (DDOA) 208a-208b. Each NROA 208a-208b includes a Faraday rotator 210 and a waveplate 212. Each DDOA 208a-208b represents a directionally-dependent polarization rotation optical assembly. The waveplate 212 can be a half waveplate or a quarter waveplate. In some embodiments, each DDOA 208a-208b includes a Faraday rotator 210 providing a polarization rotation of about 45° and a half waveplate 212 with its fast axis oriented at about 22.5° from the +x axis. However, other embodiments of the Faraday rotator 210 and the waveplate 212 may be used. For instance, various arrangements of Faraday rotators and waveplates are described in U.S. Patent Application No. 17/933,766 [Docket No. 169824US02 (RAYN01-169824)] entitled "SYSTEM AND METHOD FOR DIRECTIONALLY-DEPENDENT POLARIZATION MODIFICATION,". In some embodiments, the monostatic optical transceiver 200 includes two or more channels and is configured to transmit and receive on each channel. Here, the monostatic optical transceiver 200 can employ two or more DDOA 208a-208b to provide directionally-dependent polarization modifications, such as to permit a beam propagating in one direction to undergo no substantial polarization change while a beam propagating in the opposite direction is rotated by about 90°.

In the optical transceiver 200, optical communication signals can be transmitted and received via respective light beams, which carry communication signals. Note that the terms "beams" and "signals" may be used interchangeably. In some cases, optical communication signals can be transmitted and received on at least two wavelengths or channels, where each channel includes transmit optical signals and receive optical signals. The collection telescope 202 is configured to receive and collimate incoming receive (Rx) beams 214 and diverge and direct outgoing transmit (Tx) beams 216. Each channel may include at least one transmit beam 216 and at least one receive beam 214.

The quarter waveplate 204 is configured, for each channel, to convert a polarization of light from a linear polarization to a circular/elliptical polarization and vice versa. For example, on a first channel (Ch1), the quarter waveplate 204 may be configured to (i) convert a transmit beam 218 having a P linear polarization (transmit PLP) into a transmit beam 216 having a right-hand circular (RHC) polarization and (ii) convert a receive beam 214 having a right-hand circular (RHC) polarization into a receive beam 220 having a P linear polarization (receive PLP). On a second channel (Ch2), the quarter waveplate 204 may be configured to (i) convert another transmit beam 218 having an S linear polarization (transmit SLP) into another transmit beam 216 having a left hand (LHC) polarization and (ii) convert another receive beam 214 having an LHC polarization into another receive beam 220 having an S linear polarization (receive SLP). The ability to transmit and receive optical beams having circular polarizations enables devices to communicate with one another irrespective of orientation. As a result, the quarter waveplate 204 enables two nodes (such as nodes 102 and 104 in FIGURE 1) to communicate without having to be aligned with each other. In this example, the transmit beam 216 can include signals with P and S linear polarizations, and the receive beam 214 can include signals with P and S linear polarizations.

The PBS 206 is configured to combine and separate channels by combining and separating P and S components within optical beams. For example, in the outgoing direction, transmit beams are received from standard fiber terminals 232 and 234. The fiber terminals 232 and 234 are associated with different channels and can represent at least part of a fiber coupling that is configured to be coupled to at least one fiber optic cable. The PBS 206 can combine transmit beams 218a-218b having different P and S polarizations in different channels into the transmit beams 218. In the incoming direction, the PBS 206 can separate the receive beams 220 into receive beams 220a-220b having different P and S polarizations in the different channels. In this example, the transmit beam 218a and the receive beam 220a both have a P linear polarization, and the transmit beam 218b and the receive beam 220b both have an S linear polarization. As can be seen here, the PBS 206 is configured to separate the channels for the receive beams 220 and combine the channels for the transmit beams 218In this example, a mirror or other reflector 222 can be used to help direct signals to and from the PBS 206.

Each NROA 208a-208b can be configured to maintain or modify light according to a direction of propagation of the light through the NROA 208a-208b. In the example shown in FIGURE 2, the NROA 208a receives the transmit beam 218a, and the NROA 208b receives the transmit beam 218b. In some cases, each NROA 208a-208b is configured to maintain an angular polarization of the associated transmit beam 218a-218b while modifying an angular polarization of an associated receive beam 220a-220b. For example, the transmit beams 218a-218b propagate through the respective NROAs 208a-208b in a first direction, while the receive beams 220a-220b propagate through the NROAs 208a-208b in a second direction opposite the first direction. In some cases, the transmit beams 218a-218b may pass through the NROAs 208a-208b with little or no polarization modifications, while the receive beams 220a-220b can have their polarizations rotated as they propagate through the NROAs 208a-208b. This results in the creation of receive beams 220a' and 220b'. Accordingly, each incoming beam can propagate along the receive direction and have its polarization rotated by about 90° or other angle compared to the associated outgoing beam (which may remain unchanged). Note, however, that this can be reversed so that the outgoing signals are rotated and the incoming signals are not. This approach supports the use of dual polarizations in the optical transceiver 200, which helps to provide rotational invariance between terminals with quarter waveplates. In some embodiments, the optical signals in the different channels of the optical transceiver 200 have different wavelengths.

In this example, a PBS 224 is configured to pass the transmit beam 218a and reflect the receive beam 220a', and a PBS 228 is configured to pass the receive beam 220b' and reflect the transmit beam 218b. Among other things, this directs the receive beams 220a'-220b' to standard fiber terminals 226 and 230. Note, however, that the passing and reflectings may be reversed here. The fiber terminals 226 and 230 are associated with different channels and can represent at least part of a fiber coupling that is configured to be coupled to at least one fiber optic cable.

Note that the depictions of the signals, polarizations, and fibers as shown in FIGURE 2 are for illustration only, and the particulars of the separation and combining of signals can be changed without departing from the scope of this disclosure. Embodiments of the present disclosure provide a monostatic optical transceiver 200 that include at least one non-reciprocal optical assembly, namely one or more NROAs 208a-208b, which are used to provide directionally-dependent polarization modification that enable multiple beams to be used in the same transceiver aperture. In this example, the optical transceiver 200 is configured to communicate in free space using light having circular polarizations, which makes devices insensitive to relative orientation. The optical transceiver 200 here is designed so that counter-propagating beams of the same polarization can be separated on a non-interfering basis to provide the use of dual polarization.

In some embodiments, as described above, the NROAs 208a-208b can be configured to pass light in one direction substantially unmodified and to rotate the polarization of light passing in the opposite direction (such as by 90°). In some cases, this can be achieved using a Faraday rotator 210 that provides a polarization rotation of 45° and a half waveplate 212 with its fast axis oriented at 22.5° from the +x axis. In the first channel Ch1, transmit light (P polarized) is rotated 45°by the Faraday rotator 210 and then- 45° by the half waveplate212, leaving the outgoing polarization substantially unchanged. In the second channel Ch2, transmit light (S polarized) is rotated to 135° by the Faraday rotator 210, leaving an angle of 67.5° between the half waveplate's axis and the incident light. After passing through the half waveplate, the transmit light is rotated back, again leaving the outgoing polarization substantially unchanged. The outgoing beams are combined by the PBS 206, and the S and P polarizations are converted to circular polarizations after passing through the quarter waveplate 204. This enables dual-channel transmission.

For dual-channel rotationally-invariant reception, circularly-polarized light is captured by the collection telescope 202 and provided to the quarter waveplate 204, which can have its fast axis rotated by -45° (as viewed from the incoming light). The incoming light is converted to S and P polarized light, and these two orthogonal polarizations are separated by the PBS 206 into separate paths. In these paths, the S and P polarized receive beams overlap the S and P polarized transmit beams in space, but the transmit and receive beams travel in opposite directions in each path. In the NROA 208a, the P polarized receive beam is rotated to +135° by the half waveplate 212 and to the S polarization by the Faraday rotator 210. In the NROA 208b, the S polarized receive beam is rotated +45° by the half waveplate 212 and to the P polarization by the Faraday rotator 210. When propagating along the receive direction, both polarizations are rotated by 90° (while the transmit beams may be unchanged). This allows for dual polarization reception with rotational invariance. Note, however, that the positions of the Faraday rotator 210 and the waveplate 212 can be reversed.

Although FIGURE 2 illustrate one example of a monostatic optical transceiver 200, various changes may be made to FIGURE 2. For example, the monostatic optical transceiver 200 may include any suitable number of optical devices or different types of devices. As a more specific example, the particulars of the separation and combination of beams can be changed. Also, while the monostatic optical transceiver 200 shown in FIGURE 2 is described as using half waveplates 212 in the NROAs 208a-208b, embodiments using quarter waveplates can be used. In addition, any other suitable components may be used with the monostatic optical transceiver 200 to support any other desired functions of the monostatic optical transceiver 200.

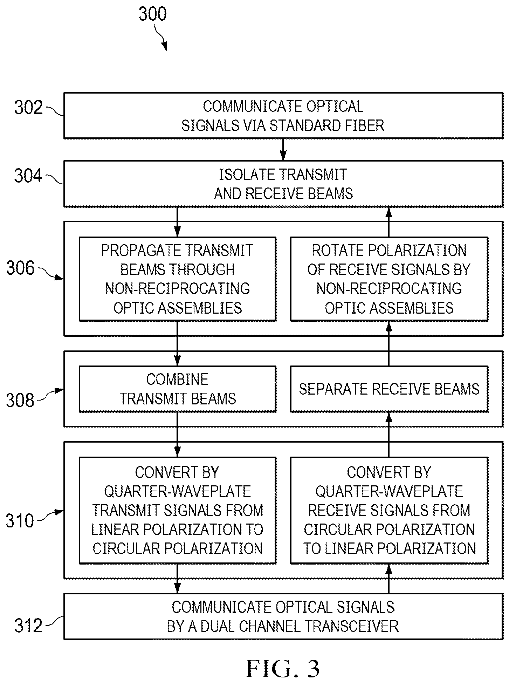

FIGURE 3 illustrates an example method 300 for transmitting and receiving multiple non-interfering polarization signals according to this disclosure. For ease of explanation, the method 300 is described with respect to the monostatic optical transceiver 200 of FIGURE 2. However, the method 300 could be used with any other suitable optical transceiver.

In step 302, transmit beams and receive beams are communicated via one or more waveguides, such as one or more standard fiber-optic cables. For example, two transmit beams can be received via fiber terminals 232 and 234 from one or more standard fiber-optic cables, and two receive beams can be provided via fiber couplings to one or more standard fiber-optic cables. Each of the transmits beams can be received with a respective polarity and on a respective channel, and each of the receive beams can be provided with a respective polarity on a respective channel. As a particular example, a first transmit beam with a P polarization may be received on a first channel, a second transmit beam with an S polarization may be received on a second channel, a first receive beam with an S polarization may be provided on the first channel, and a second receive beam with a P polarization may be provided on the second channel.

In step 304, the transmit and receive beams for each channel are isolated. For example, the transmit and receive beams for the first channel may be separated by the PBS 224, and the transmit and receive beams for the second channel may be separated by the PBS 228. Each PBS 224 and 228 can separate light based on the polarizations in the light. In step 306, the transmit and receive beams are propagated through non-reciprocating optical assemblies, such as NROAs 208a-208b. For example, in the first channel, the first transmit beam and the first receive beam can propagate through a first NROA 208a. In the second channel, the second transmit beam and the second receive beam can propagate through a second NROA 308b. In some cases, each NROA 208a-208b may be configured to pass light (such as the transmit beams) propagating in one direction substantially unmodified while rotating the polarization of light (such as the receive beams) propagating in the opposite direction.

In step 308, the transmit beams from the channels are combined, and the receive beams are separated into the channels. For example, the transmit beams from the channels may be combined by allowing the transmit beam from the first channel to propagate through the PBS 206 while reflecting the transmit beam from the second channel by the PBS 206. The PBS 206 can also split incoming light into the receive beams in the channels based on the polarizations in the incoming light.

In step 310, the transmit and receive beams propagate through a quarter waveplate. The quarter waveplate 204 converts the transmit beams from linear polarizations to circular/elliptical polarizations, and the quarter waveplate 204 converts the receive beams from circular/elliptical polarizations to linear polarizations. In step 312, the beams are used for communication or other purposes.

Although FIGURE 3 illustrates one example of a method 300 for transmitting and receiving multiple non-interfering polarization signals, various changes may be made to FIGURE 3. For example, while shown as a series of steps, various steps in FIGURE 3 could overlap, occur in parallel, occur in a different order, or occur multiple times.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. An apparatus comprising:
a first polarization beamsplitter (224) configured to separate incoming (220a) and outgoing (218a) optical signals having different polarizations;
a first directionally-dependent polarization rotation optical assembly (208a) configured to maintain a polarization of one of the incoming and outgoing optical signals (220a, 218a) and to rotate a polarization of another of the incoming and outgoing optical signals (220a, 218a);
a second polarization beamsplitter (206) configured to (i) combine the outgoing optical signals to produce transmit optical signals (218) and (ii) separate receive optical signals (220) to produce the incoming optical signals; and **characterized by**
a waveplate (204) configured to (i) convert the transmit optical signals into first free-space optical signals having right-hand circular polarization to be transmitted on a first wavelength and left-hand circular polarization to be transmitted on a second wavelength and (ii) convert second free-space optical signals having the left-hand circular polarization received on the first wavelength and the right-hand circular polarization received on the second wavelength into the receive optical signals having a linear polarization.

2. The apparatus of Claim 1, further comprising:
a third polarization beamsplitter (228) configured to separate incoming (220b) and outgoing (218b) optical signals having different polarizations; and
a second directionally-dependent polarization rotation optical assembly (208b) configured to maintain a polarization of one of the incoming and outgoing optical signals (220b, 218b) and to rotate a polarization of another of the incoming and outgoing optical signals (220b, 218b).

3. The apparatus of Claim 2, wherein each of the first and second directionally-dependent polarization rotation optical assemblies (208a, 208b) comprises:
a Faraday rotator (210) and an additional waveplate (212) optically positioned between one of the first and third polarization beamsplitters (224, 228) and the second polarization beamsplitter (206), the Faraday rotator and the additional waveplate collectively configured to provide a relative polarization change between (i) light propagating in a first direction through the Faraday rotator and the additional waveplate and (ii) light propagating in a second direction opposite the first direction through the Faraday rotator and the additional waveplate.

4. The apparatus of Claim 2, wherein the second polarization beamsplitter (206) is configured to:
combine a first of the outgoing optical signals (218a) from a first channel (Ch1) with a second of the outgoing optical signals (218b) from a second channel (Ch2); and
provide a first of the incoming optical signals (220a) for the first channel and a second of the incoming optical signals (220b) for the second channel.

5. The apparatus of Claim 4, wherein:
the first directionally-dependent polarization rotation optical assembly (208a) is configured to rotate a polarization of the first incoming optical signal (220a) from a P polarization to an S polarization while maintaining the P polarization of the first outgoing optical signal (218a); and
the second directionally-dependent polarization rotation optical assembly (208b) is configured to rotate a polarization of the second incoming optical signal (220b) from the S polarization to the P polarization while maintaining the S polarization of the second outgoing optical signal (218b).

6. The apparatus of Claim 1 or 2, further comprising:
a fiber coupling configured to couple to a fiber optic cable, the fiber coupling comprising first fiber terminals (226, 232) for a first channel (Ch1) and second fiber terminals (230, 234) for a second channel (Ch2).

7. The apparatus of Claim 6, wherein:
the first channel (Ch1) is associated with the first wavelength;
the second channel (Ch2) is associated with the second wavelength; and
each channel is associated with one of the outgoing optical signals (218a, 218b) and one of the incoming optical signals (220a, 220b).

8. The apparatus of Claim 2, further comprising a transceiver (200);
wherein the transceiver comprises the polarization beamsplitters (206, 224, 228), the directionally-dependent polarization rotation optical assemblies (208a, 208b), and the waveplate (204).

9. The apparatus of Claim 3, wherein the Faraday rotator (210) and the additional waveplate (212) are collectively configured to apply a 90° polarization rotation to the light propagating in one of the first and second directions.

10. The apparatus of Claim 1 or 2, further comprising:
a telescope (202) configured to emit the transmit optical signals (218) and receive the receive optical signals (220).

11. A method comprising:
separating incoming (220a, 220b) and outgoing (218a, 218b) optical signals having different polarizations using first and second polarization beamsplitters (224, 228);
passing the incoming optical signals and the outgoing optical signals through first and second directionally-dependent polarization rotation optical assemblies (208a, 208b), each of the directionally-dependent polarization rotation optical assemblies maintaining a polarization of one of the incoming and outgoing optical signals and rotating a polarization of another of the incoming and outgoing optical signals;
combining the outgoing optical signals to produce transmit optical signals (218);
separating receive optical signals (220) to produce the incoming optical signals; and **characterized by** using a waveplate to:
convert the transmit optical signals into first free-space optical signals having right-hand circular polarization to be transmitted on a first wavelength and left-hand circular polarization to be transmitted on a second wavelength; and
convert second free-space optical signals having the left-hand circular polarization received on the first wavelength and the right-hand circular polarization received on the second wavelength into the receive optical signals having a linear polarization.

12. The method of Claim 11, wherein each of the first and second directionally-dependent polarization rotation optical assemblies (208a, 208b) comprises:
a Faraday rotator (210) and an additional waveplate (212) collectively providing a relative polarization change between (i) light propagating in a first direction through the Faraday rotator and the additional waveplate and (ii) light propagating in a second direction opposite the first direction through the Faraday rotator and the additional waveplate.

13. The method of Claim 12, wherein a third polarization beamsplitter (206) combines the outgoing (218a, 218b) optical signals to produce the transmit optical signals (218) and separates the receive optical signals (220) to produce the incoming optical signals (220a, 220b).

14. The method of Claim 11, wherein:
a first channel (Ch1) is associated with the first wavelength;
a second channel is associated with the second wavelength; and
each channel is associated with one of the outgoing optical signals (218a, 218b) and one of the incoming optical signals (220a, 220b).

15. The method of Claim 11, wherein:
the first directionally-dependent polarization rotation optical assembly (208a) rotates a polarization of the first incoming optical signal (220a) from a P polarization to an S polarization while maintaining the P polarization of the first outgoing optical signal (218a); and
the second directionally-dependent polarization rotation optical assembly (208b) rotates a polarization of the second incoming optical signal (220b) from the S polarization to the P polarization while maintaining the S polarization of the second outgoing optical signal (218b).

## Patentansprüche

1. Einrichtung, umfassend:
einen ersten Polarisationsstrahlteiler (224), der ausgelegt ist zum Trennen von eingehenden (220a) und ausgehenden (218a) optischen Signalen, die unterschiedliche Polarisationen aufweisen;
eine erste richtungsabhängige Polarisationsdrehungs-Optikbaugruppe (208a), die ausgelegt ist zum Aufrechterhalten einer Polarisation eines der eingehenden und ausgehenden optischen Signale (220a, 218a) und zum Drehen einer Polarisation eines anderen der eingehenden und ausgehenden optischen Signale (220a, 218a);
einen zweiten Polarisationsstrahlteiler (206), der ausgelegt ist zum (i) Kombinieren der ausgehenden optischen Signale zum Erzeugen von optischen Sendesignalen (218) und (ii) Trennen von optischen Empfangssignalen (220) zum Erzeugen der eingehenden optischen Signale; und **dadurch gekennzeichnet** durch
eine Wellenplatte (204), die ausgelegt ist zum (i) Umwandeln der optischen Sendesignale in erste optische Freiraumsignale, die rechtszirkulare Polarisation zum Übertragen auf einer ersten Wellenlänge und linkszirkulare Polarisation zum Übertragen auf einer zweiten Wellenlänge aufweisen, und (ii) Umwandeln von zweiten optischen Freiraumsignalen, die die auf der ersten Wellenlänge empfangene linkszirkulare Polarisation und die auf der zweiten Wellenlänge empfangene rechtszirkulare Polarisation aufweisen, in die optischen Empfangssignale, die eine lineare Polarisation aufweisen.

2. Einrichtung nach Anspruch 1, ferner umfassend:
einen dritten Polarisationsstrahlteiler (228), der ausgelegt ist zum Trennen von eingehenden (220b) und ausgehenden (218b) optischen Signalen, die unterschiedliche Polarisationen aufweisen; und
eine zweite richtungsabhängige Polarisationsdrehungs-Optikbaugruppe (208b), die ausgelegt ist zum Aufrechterhalten einer Polarisation eines der eingehenden und ausgehenden optischen Signale (220b, 218b) und zum Drehen einer Polarisation eines anderen der eingehenden und ausgehenden optischen Signale (220b, 218b).

3. Einrichtung nach Anspruch 2, wobei jede der ersten und zweiten richtungsabhängigen Polarisationsdrehungs-Optikbaugruppen (208a, 208b) umfasst:
einen Faraday-Rotator (210) und eine zusätzliche Wellenplatte (212), die optisch zwischen einem der ersten und dritten Polarisationsstrahlteiler (224, 228) und dem zweiten Polarisationsstrahlteiler (206) positioniert sind, wobei der Faraday-Rotator und die zusätzliche Wellenplatte gemeinsam ausgelegt sind zum Bereitstellen einer relativen Polarisationsänderung zwischen (i) Licht, das sich in einer ersten Richtung durch den Faraday-Rotator und die zusätzliche Wellenplatte ausbreitet, und (ii) Licht, das sich in einer zweiten Richtung entgegengesetzt der ersten Richtung durch den Faraday-Rotator und die zusätzliche Wellenplatte ausbreitet.

4. Einrichtung nach Anspruch 2, wobei der zweite Polarisationsstrahlteiler (206) ausgelegt ist zum:
Kombinieren eines ersten der ausgehenden optischen Signale (218a) von einem ersten Kanal (Ch1) mit einem zweiten der ausgehenden optischen Signale (218b) von einem zweiten Kanal (Ch2); und
Bereitstellen eines ersten der eingehenden optischen Signale (220a) für den ersten Kanal und eines zweiten der eingehenden optischen Signale (220b) für den zweiten Kanal.

5. Einrichtung nach Anspruch 4, wobei:
die erste richtungsabhängige Polarisationsdrehungs-Optikbaugruppe (208a) ausgelegt ist zum Drehen einer Polarisation des ersten eingehenden optischen Signals (220a) von einer P-Polarisation zu einer S-Polarisation, während die P-Polarisation des ersten ausgehenden optischen Signals (218a) aufrechterhalten wird; und
die zweite richtungsabhängige Polarisationsdrehungs-Optikbaugruppe (208b) ausgelegt ist zum Drehen einer Polarisation des zweiten eingehenden optischen Signals (220b) von der S-Polarisation zu der P-Polarisation, während die S-Polarisation des zweiten ausgehenden optischen Signals (218b) aufrechterhalten wird.

6. Einrichtung nach Anspruch 1 oder 2, ferner umfassend:
eine Faserkopplung, die ausgelegt ist zum Koppeln an einen Lichtwellenleiter, wobei die Faserkopplung erste Faseranschlüsse (226, 232) für einen ersten Kanal (Ch1) und zweite Faseranschlüsse (230, 234) für einen zweiten Kanal (Ch2) umfasst.

7. Einrichtung nach Anspruch 6, wobei:
der erste Kanal (Ch1) der ersten Wellenlänge zugeordnet ist;
der zweite Kanal (Ch2) der zweiten Wellenlänge zugeordnet ist; und
jeder Kanal einem der ausgehenden optischen Signale (218a, 218b) und einem der eingehenden optischen Signale (220a, 220b) zugeordnet ist.

8. Einrichtung nach Anspruch 2, ferner umfassend einen Transceiver (200);
wobei der Transceiver die Polarisationsstrahlteiler (206, 224, 228), die richtungsabhängigen Polarisationsdrehungs-Optikbaugruppen (208a, 208b) und die Wellenplatte (204) umfasst.

9. Einrichtung nach Anspruch 3, wobei der Faraday-Rotator (210) und die zusätzliche Wellenplatte (212) gemeinsam ausgelegt sind, eine 90°-Polarisationsdrehung auf das Licht anzuwenden, das sich in einer der ersten und zweiten Richtungen ausbreitet.

10. Einrichtung nach Anspruch 1 oder 2, ferner umfassend:
ein Teleskop (202), das ausgelegt ist zum Aussenden der optischen Sendesignale (218) und Empfangen der optischen Empfangssignale (220).

11. Verfahren, umfassend:
Trennen von eingehenden (220a, 220b) und ausgehenden (218a, 218b) optischen Signalen, die unterschiedliche Polarisationen aufweisen, unter Verwendung von ersten und zweiten Polarisationsstrahlteilern (224, 228);
Durchleiten der eingehenden optischen Signale und der ausgehenden optischen Signale durch erste und zweite richtungsabhängige Polarisationsdrehungs-Optikbaugruppen (208a, 208b), wobei jede der richtungsabhängigen Polarisationsdrehungs-Optikbaugruppen eine Polarisation eines der eingehenden und ausgehenden optischen Signale aufrechterhält und eine Polarisation eines anderen der eingehenden und ausgehenden optischen Signale dreht;
Kombinieren der ausgehenden optischen Signale zum Erzeugen von optischen Sendesignalen (218);
Trennen von optischen Empfangssignalen (220) zum Erzeugen der eingehenden optischen Signale; und **dadurch gekennzeichnet** durch Verwenden einer Wellenplatte zum:
Umwandeln der optischen Sendesignale in erste optische Freiraumsignale, die rechtszirkulare Polarisation zum Übertragen auf einer ersten Wellenlänge und linkszirkulare Polarisation zum Übertragen auf einer zweiten Wellenlänge aufweisen; und
Umwandeln von zweiten optischen Freiraumsignalen, die die auf der ersten Wellenlänge empfangene linkszirkulare Polarisation und die auf der zweiten Wellenlänge empfangene rechtszirkulare Polarisation aufweisen, in die optischen Empfangssignale, die eine lineare Polarisation aufweisen.

12. Verfahren nach Anspruch 11, wobei jede der ersten und zweiten richtungsabhängigen Polarisationsdrehungs-Optikbaugruppen (208a, 208b) umfasst:
einen Faraday-Rotator (210) und eine zusätzliche Wellenplatte (212), die gemeinsam eine relative Polarisationsänderung zwischen (i) sich in einer ersten Richtung durch den Faraday-Rotator und die zusätzliche Wellenplatte ausbreitendem Licht und (ii) sich in einer zweiten, der ersten Richtung entgegengesetzten Richtung durch den Faraday-Rotator und die zusätzliche Wellenplatte ausbreitendem Licht bereitstellen.

13. Verfahren nach Anspruch 12, wobei ein dritter Polarisationsstrahlteiler (206) die ausgehenden optischen Signale (218a, 218b) kombiniert, um die optischen Sendesignale (218) zu erzeugen, und die optischen Empfangssignale (220) trennt, um die eingehenden optischen Signale (220a, 220b) zu erzeugen.

14. Verfahren nach Anspruch 11, wobei:
ein erster Kanal (Ch1) der ersten Wellenlänge zugeordnet ist;
ein zweiter Kanal der zweiten Wellenlänge zugeordnet ist; und jeder Kanal einem der ausgehenden optischen Signale (218a, 218b) und einem der eingehenden optischen Signale (220a, 220b) zugeordnet ist.

15. Verfahren nach Anspruch 11, wobei:
die erste richtungsabhängige Polarisationsdrehungs-Optikbaugruppe (208a) eine Polarisation des ersten eingehenden optischen Signals (220a) von einer P-Polarisation zu einer S-Polarisation dreht, während sie die P-Polarisation des ersten ausgehenden optischen Signals (218a) aufrechterhält; und
die zweite richtungsabhängige Polarisationsdrehungs-Optikbaugruppe (208b) eine Polarisation des zweiten eingehenden optischen Signals (220b) von der S-Polarisation zu der P-Polarisation dreht, während sie die S-Polarisation des zweiten ausgehenden optischen Signals (218b) aufrechterhält.

## Revendications

1. Appareil comprenant :
un premier séparateur de faisceau de polarisation (224) configuré pour séparer les signaux optiques entrants (220a) et sortants (218a) ayant des polarisations différentes ;
un premier ensemble optique de rotation de polarisation dépendant de la direction (208a) configuré pour maintenir une polarisation de l'un des signaux optiques entrants et sortants (220a, 218a) et pour faire tourner une polarisation d'un autre des signaux optiques entrants et sortants (220a, 218a) ;
un second séparateur de faisceau polarisant (206) configuré pour (i) combiner les signaux optiques sortants afin de produire des signaux optiques d'émission (218) et (ii) séparer les signaux optiques de réception (220) afin de produire les signaux optiques entrants ; et **caractérisé par**
une lame onde (204) configurée pour (i) convertir les signaux optiques d'émission en premiers signaux optiques en espace libre ayant une polarisation circulaire droite à transmettre sur une première longueur d'onde et une polarisation circulaire gauche à transmettre sur une seconde longueur d'onde et (ii) convertir les seconds signaux optiques en espace libre ayant la polarisation circulaire gauche reçue sur la première longueur d'onde et la polarisation circulaire droite reçue sur la seconde longueur d'onde en signaux optiques de réception ayant une polarisation linéaire.

2. Appareil selon la revendication 1, comprenant en outre :
un troisième séparateur de faisceau de polarisation (228) configuré pour séparer les signaux optiques entrants (220b) et sortants (218b) ayant des polarisations différentes ; et
un second ensemble optique de rotation de polarisation dépendant de la direction (208b) configuré pour maintenir une polarisation de l'un des signaux optiques entrants et sortants (220b, 218b) et pour faire tourner une polarisation d'un autre des signaux optiques entrants et sortants (220b, 218b).

3. Appareil selon la revendication 2, dans lequel chacun des premier et second ensembles optiques de rotation de polarisation dépendants de la direction (208a, 208b) comprend :
un rotateur de Faraday (210) et une lame onde supplémentaire (212) positionnés optiquement entre l'un des premier et troisième séparateurs de faisceau de polarisation (224, 228) et le deuxième séparateur de faisceau de polarisation (206), le rotateur de Faraday et la lame onde supplémentaire étant collectivement configurés pour fournir un changement de polarisation relatif entre (i) la lumière se propageant dans une première direction à travers le rotateur de Faraday et la lame onde supplémentaire et (ii) la lumière se propageant dans une seconde direction opposée à la première direction à travers le rotateur de Faraday et la lame onde supplémentaire.

4. Appareil selon la revendication 2, dans lequel le deuxième séparateur de faisceau de polarisation (206) est configuré pour :
combiner un premier des signaux optiques sortants (218a) d'un premier canal (Ch1) avec un second des signaux optiques sortants (218b) d'un second canal (Ch2) ; et
fournir un premier des signaux optiques entrants (220a) pour le premier canal et un second des signaux optiques entrants (220b) pour le second canal.

5. Appareil selon la revendication 4, dans lequel :
le premier ensemble optique de rotation de polarisation dépendant de la direction (208a) est configuré pour faire tourner une polarisation du premier signal optique entrant (220a) d'une polarisation P à une polarisation S tout en maintenant la polarisation P du premier signal optique sortant (218a) ; et
le second ensemble optique de rotation de polarisation dépendant de la direction (208b) est configuré pour faire tourner la polarisation du second signal optique entrant (220b) de la polarisation S à la polarisation P tout en maintenant la polarisation S du second signal optique sortant (218b).

6. Appareil selon la revendication 1 ou 2, comprenant en outre : un couplage de fibre configuré pour se coupler à un câble à fibre optique, le couplage de fibre comprenant des premières bornes de fibre (226, 232) pour un premier canal (Ch1) et des secondes bornes de fibre (230, 234) pour un second canal (Ch2).

7. Appareil selon la revendication 6, dans lequel :
le premier canal (Ch1) est associé à la première longueur d'onde ;
le second canal (Ch2) est associé à la seconde longueur d'onde ; et
chaque canal est associé à l'un des signaux optiques sortants (218a, 218b) et à l'un des signaux optiques entrants (220a, 220b).

8. Appareil selon la revendication 2, comprenant en outre un émetteur-récepteur (200) ;
dans lequel l'émetteur-récepteur comprend les séparateurs de faisceau de polarisation (206, 224, 228), les ensembles optiques de rotation de polarisation dépendants de la direction (208a, 208b) et la lame onde (204).

9. Appareil selon la revendication 3, dans lequel le rotateur de Faraday (210) et la lame onde supplémentaire (212) sont configurés collectivement pour appliquer une rotation de polarisation de 90° à la lumière se propageant dans l'une des première et seconde directions.

10. Appareil selon la revendication 1 ou 2, comprenant en outre :
un télescope (202) configuré pour émettre les signaux optiques d'émission (218) et recevoir les signaux optiques de réception (220).

11. Procédé comprenant :
la séparation des signaux optiques entrants (220a, 220b) et sortants (218a, 218b) ayant des polarisations différentes en utilisant des premier et second séparateurs de faisceau (224, 228) ;
le passage des signaux optiques entrants et des signaux optiques sortants à travers les premier et second ensembles optiques de rotation de polarisation dépendants de la direction (208a, 208b), chacun des ensembles optiques de rotation de polarisation dépendants de la direction maintenant une polarisation de l'un des signaux optiques entrants et sortants et la rotation d'une polarisation d'un autre des signaux optiques entrants et sortants ;
la combinaison des signaux optiques sortants pour produire des signaux optiques d'émission (218) ;
la séparation des signaux optiques de réception (220) pour produire les signaux optiques entrants ; et **caractérisé par** l'utilisation d'une lame onde pour :
convertir les signaux optiques d'émission en premiers signaux optiques en espace libre ayant une polarisation circulaire droite à transmettre sur une première longueur d'onde et une polarisation circulaire gauche à transmettre sur une seconde longueur d'onde ; et
convertir les seconds signaux optiques en espace libre ayant une polarisation circulaire gauche reçue sur la première longueur d'onde et une polarisation circulaire droite reçue sur la seconde longueur d'onde en signaux optiques de réception ayant une polarisation linéaire.

12. Procédé selon la revendication 11, dans lequel chacun des premier et second ensembles optiques de rotation de polarisation dépendant de la direction (208a, 208b) comprend :
un rotateur de Faraday (210) et une lame onde supplémentaire (212) fournissant collectivement un changement de polarisation relatif entre (i) la lumière se propageant dans une première direction à travers le rotateur de Faraday et la lame onde supplémentaire et (ii) la lumière se propageant dans une seconde direction opposée à la première direction à travers le rotateur de Faraday et la lame onde supplémentaire.

13. Procédé selon la revendication 12, dans lequel un troisième séparateur de faisceau de polarisation (206) combine les signaux optiques sortants (218a, 218b) pour produire les signaux optiques d'émission (218) et sépare les signaux optiques de réception (220) pour produire les signaux optiques entrants (220a, 220b).

14. Procédé selon la revendication 11, dans lequel :
un premier canal (Ch1) est associé à la première longueur d'onde ;
un second canal est associé à la seconde longueur d'onde ; et
chaque canal est associé à l'un des signaux optiques sortants (218a, 218b) et à l'un des signaux optiques entrants (220a, 220b).

15. Procédé selon la revendication 11, dans lequel :
le premier ensemble optique de rotation de polarisation dépendant de la direction (208a) fait tourner une polarisation du premier signal optique entrant (220a) d'une polarisation P à une polarisation S tout en maintenant la polarisation P du premier signal optique sortant (218a) ; et
le second ensemble optique de rotation de polarisation dépendant de la direction (208b) fait tourner une polarisation du second signal optique entrant (220b) de la polarisation S à la polarisation P tout en maintenant la polarisation S du second signal optique sortant (218b).
